# FASCICULE DE BREVET EUROPEEN

(11) **EP 4 073 909 B1**
(45) Date de publication et mention de la délivrance du brevet: **23.09.2026**
(21) Numéro de dépôt: 20817017.5
(22) Date de dépôt: 07.12.2020
(51) Int. Cl.: H02K 5/15, H02K 5/20

(54) **MACHINE ÉLECTRIQUE TOURNANTE COMPRENANT UN FLASQUE**
ELEKTRISCHE ROTIERENDE MASCHINE UMFASSEND EIN LAGERSCHILD
ELECTRIC ROTATING MACHINE COMPRISING AN END SHIELD

(30) Priorité: 09.12.2019 FR 1913986
(43) Date de publication de la demande: 19.10.2022
(73) Titulaire: Valeo Electrification, 95800 Cergy (FR)
(72) Inventeur: SASSANE, Khalid, 94046 Créteil Cedex (FR); SANTOS, Rafael, 94046 Créteil Cedex (FR); BONNICI, Matthieu, 94046 Créteil Cedex (FR); TARRAGO, Jean-Luc, 94046 Créteil Cedex (FR); DEFEBVIN, Alain, 62630 Étaples-sur-Mer (FR); KRIKEB, Mohammed, 94046 Créteil Cedex (FR)
(74) Mandataire: Valeo Powertrain Systems
(86) Numéro de dépôt international: PCT/EP2020/084934
(87) Numéro de publication internationale: WO 2021/116040

(56) Documents cités:
- WO-A1-2005/064772
- WO-A1-2018/197640
- FR-A1- 3 066 659
- JP-A- S5 556 446
- US-A1- 2009 108 700

## Description

L'invention concerne notamment un flasque pour une machine électrique tournante et une machine électrique tournante comprenant un tel flasque, comme décrites par exemple dans les documents WO 2018/197640 A1, JP 55-056446, US 2009/108700 A1, WO 2005/064772 A1, ou FR 3 066 659, notamment pour un véhicule tel qu'un véhicule automobile.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule automobile.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique.

Le stator comporte un corps formant une série d'encoche traversée par un bobinage électrique s'étendant axialement de part et d'autre du corps pour former des parties appelées chignons. Le corps de stator est monté dans deux flasques formant le boitier de la machine électrique tournante. De manière classique, chacun des flasques présente une portion de maintien s'étendant sur toute la circonférence du corps de stator.

Lorsque l'encombrement de la machine électrique est limité, les chignons peuvent être radialement très proche des flasques et cela peut engendrer des courts-circuits durant le fonctionnement de la machine électrique tournante.

La présente invention vise à permettre d'éviter les inconvénients de l'art antérieur. En particulier, l'invention vise à proposer une machine électrique tournante à faible encombrement radial dont les chignons sont suffisamment éloignés des flasques pour ne pas créer de court-circuit tout en assurant un maintien efficace du stator par les flasques.

A cet effet, la présente invention telle que définie par la revendication 1 a donc pour objet une machine électrique tournante comprenant un flasque, celui-ci comportant : un plateau s'étendant globalement transversalement par rapport à un axe, une jupe s'étendant globalement axialement à partir du plateau, la jupe présentant au moins un épaulement formant un arrêt axial, l'épaulement étant destiné à bloquer axialement un corps de stator de la machine électrique tournante. Selon l'invention, l'épaulement s'étend uniquement sur une portion de la circonférence de la jupe.

L'épaulement forme donc un élément d'arrêt axial ponctuel pouvant également être appelé butée axiale et permettant de garantir une immobilisation du stator par rapport au flasque en concentrant le maintien du stator uniquement dans certaines zones. L'épaulement ne s'étend donc pas sur toute la circonférence du stator, ce qui permet de réduire les tolérances d'assemblage. Ainsi, l'encombrement radial de la machine peut être diminuer tout en empêchant, de manière fiable, tout mouvement du stator ainsi que la création de court-circuit.

De plus, le fait que l'épaulement qui forme la zone de maintien du corps de stator sur le flasque s'étende uniquement sur une portion de la circonférence de la jupe permet de diminuer l'épaisseur de la jupe, par rapport à une jupe classique de l'art antérieur, dans toutes les zones ne participant pas au maintien du corps de stator. Cela permet donc de diminuer le poids du flasque et donc celui de la machine électrique tournante tout en assurant un maintien efficace du corps de stator.

Selon une réalisation, l'épaulement est formé par usinage. Cela permet d'améliorer la précision des dimensions de l'épaulement et ainsi de diminuer encore plus les tolérances d'assemblage pour augmenter la réduction des dimensions de la machine tout en évitant le risque de court-circuit.

Selon une réalisation, le flasque comporte plusieurs épaulements agencés à distance les uns des autres le long de la circonférence de la jupe. La jupe du flasque comporte donc au moins deux épaulements distincts. Cela permet de répartir les efforts de maintien du corps de stator le long de la circonférence de la jupe pour limiter le risque de casse de la jupe ou de mauvais maintien du corps du stator. De préférence, les épaulements sont régulièrement répartis le long de la circonférence de la jupe. Cela permet d'équilibre la machine.

Selon une réalisation, la jupe présente au moins un moyen de fixation destiné à participer à l'assemblage entre ledit flasque et un autre flasque de la machine électrique tournante. Selon cette réalisation, l'épaulement est agencé radialement entre le moyen de fixation et l'axe du flasque. Autrement dit, une portion de l'épaulement est comprise dans un plan comprenant l'axe et passant par le moyen de fixation. Cela permet de positionner l'épaulement dans la zone où la force de maintien axiale peut être maximale pour ainsi améliorer le maintien du corps de stator sans augmenter les risques de casse de la jupe.

Selon une réalisation les épaulements s'étendent, au total, circonférentiellement sur une portion inférieure à 70% de la circonférence totale de la jupe. Ainsi, la totalité de la surface d'appuie entre le flasque et le stator est inférieure à 70% de la circonférence de la jupe.

Selon une réalisation les épaulements s'étendent, au total, circonférentiellement sur une portion supérieure à 20% de la circonférence totale de la jupe. Ainsi, la totalité de la surface d'appuie entre le flasque et le stator est inférieure à 20% de la circonférence de la jupe.

Selon une réalisation, les épaulements s'étendent, au total, sur une portion comprise entre 25% et 40% de la circonférence totale de la jupe et notamment de l'ordre de 30% à 32% tel que 31%.

Par exemple, chaque épaulement s'étend sur une portion comprise entre 5% et 10% de la circonférence totale de la jupe et notamment de l'ordre de 7 à 8% de la circonférence totale de la jupe.

Ces dimensions permettent d'optimiser la zone de maintien pour trouver un bon compromis entre un maintien efficace du corps de stator avec un encombrement réduit de la machine, la réduction du poids de la machine et le nombre des ouvertures d'entrée/sortie d'air permettant le refroidissement de la machine.

Selon l'invention, l'épaulement s'étend sur une surface interne de la jupe.

Selon une réalisation, l'épaulement est monobloc avec la jupe.

Selon une réalisation, l'épaulement est formé d'une surface de maintien s'étendant dans une direction globalement radiale vers l'axe et d'une surface circonférentielle s'étendant globalement axialement depuis la surface de maintien, ladite surface de maintien et ladite surface circonférentielle étant usinées. Ces surfaces usinées permettent d'avoir des dimensions et notamment un diamètre très précis pour ainsi diminuer les tolérances d'assemblage et pouvoir la rapprochée du chignon du bobinage sans avoir de risque de créer un court-circuit tout en permettant d'améliorer la réduction du diamètre de la machine.

Selon une réalisation, la surface circonférentielle s'étend depuis la surface de maintien jusqu'au plateau. Il n'y a donc pas d'ouverture agencée axialement entre l'épaulement et le plateau. Cela permet d'améliorer la rigidité du flasque.

Alternativement, la surface circonférentielle s'étend dans une direction parallèle à l'axe. Autrement dit, la surface usinée forme une surface plane s'étendant axialement. Cela permet d'optimiser l'écartement entre la jupe et le chignon et ainsi réduire les risques de court-circuit

Selon l'invention, la jupe présente des ouvertures radiales permettant le passage d'un flux d'air, l'épaulement s'étendant circonférentiellement entre deux ouvertures radiales. Cela permet d'agrandir les ouvertures, par rapport à un flasque classique où le maintien de corps de stator se fait sur toute la circonférence de la jupe. Le refroidissement de la machine est ainsi amélioré.

De préférence, au moins une ouverture est agencée dans un même plan radial que la surface de maintien de l'épaulement. L'ouverture est ainsi en vis-à-vis de la base de chignon, c'est-à-dire la partie des chignons qui est adjacente au corps de stator. Cela permet d'améliorer le refroidissement du chignon du stator, notamment à son point le plus chaud.

La présente invention concerne donc une machine électrique tournante comportant : un stator comportant un corps de stator formant des encoches et un bobinage électrique logé au moins partiellement dans lesdites encoches, au moins un flasque, tel que précédemment décrit, agencé pour entourer, au moins partiellement, le stator et formant un arrêt axial pour le corps de stator.

Selon une réalisation, la machine comporte un deuxième flasque, le corps de stator présentant une zone de frettage avec ledit deuxième flasque. La force de maintien exercée par le frettage associée à celle exercée par l'épaulement permettent d'améliorer le maintien du corps de stator tout en améliorant le refroidissement dudit corps et en réduisant l'encombrement de la machine. Par exemple, la zone de frettage s'étend sur toute la circonférence du deuxième flasque et notamment sur toute la circonférence de la jupe dudit deuxième flasque.

La machine électrique tournante peut, avantageusement, former un alternateur, un alterno-démarreur, une machine réversible ou un moteur électrique.

La présente invention pourra être mieux comprise à la lecture de la description détaillée qui va suivre, d'exemples de mise en œuvre non limitatifs de l'invention et de l'examen des dessins annexés.

La Figure 1 représente, schématiquement et partiellement, une vue en coupe d'une machine électrique tournante selon un exemple de mise en œuvre de l'invention.

La Figure 2 représente, schématiquement et partiellement, une vue en perspective de l'intérieur du premier flasque selon un exemple de réalisation.

La Figure 3 représente, schématiquement et partiellement, une vue de dessus du de la figure 2.

La Figure 4 représente, schématiquement et partiellement, une vue en perspective d'un des épaulements de la figure 2.

La Figure 5 représente, schématiquement et partiellement, une vue en coupe d'une partie du stator monté dans le flasque selon une variante de réalisation du flasque.

Les éléments identiques, similaires ou analogues conservent les mêmes références d'une figure à l'autre. On notera également que les différentes figures ne sont pas nécessairement à la même échelle. De plus, les modes de réalisation qui sont décrits dans la suite ne sont nullement limitatifs ; on pourra notamment imaginer des variantes de l'invention ne comprenant qu'une sélection de caractéristiques décrites par la suite isolées des autres caractéristiques décrites. En particulier toutes les variantes et tous les modes de réalisation décrits sont combinables entre eux si rien ne s'oppose à cette combinaison sur le plan technique.

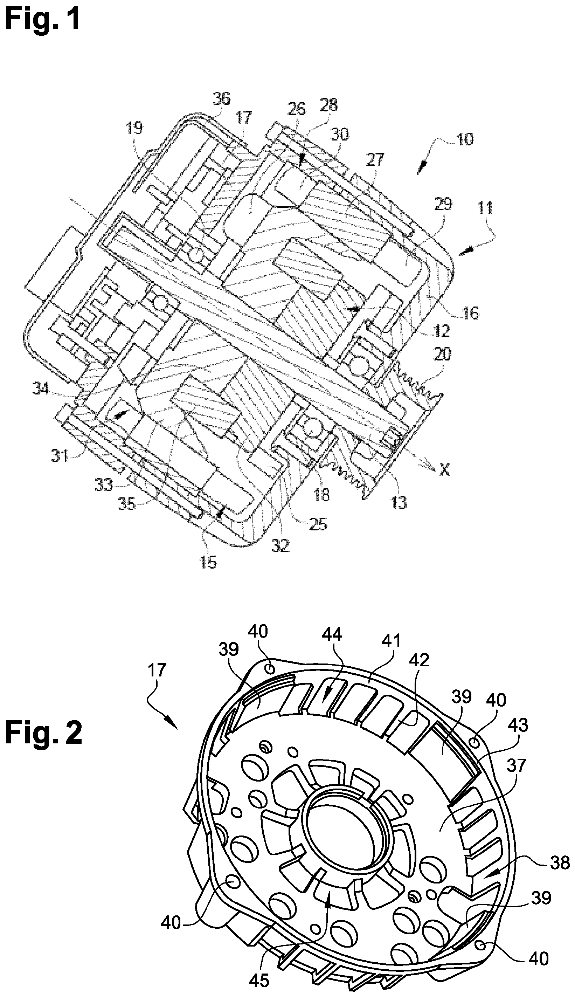

La figure 1 représente un exemple de machine électrique tournante 10 compacte et polyphasée, notamment pour véhicule automobile. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier 11. A l'intérieur de ce boitier 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination intérieure correspondant à un élément orienté vers l'axe, ou plus proche de l'axe par rapport à un second élément, la dénomination extérieure désignant un éloignement de l'axe.

Dans cet exemple, le boitier 11 comporte un flasque avant 16 et un flasque arrière 17 qui sont assemblés ensemble. Ces flasques 16, 17 sont de forme creuse et portent, chacun, centralement un palier accouplé à un roulement à billes 18, 19 respectif pour le montage à rotation de l'arbre 13. En outre, le boitier 11 comporte des moyens de maintien 14 permettant le montage de la machine électrique tournante 10 dans le véhicule.

Un organe d'entraînement tel qu'une poulie 20 peut être fixé sur une extrémité avant de l'arbre 13. Cet organe permet de transmettre le mouvement de rotation à l'arbre ou à l'arbre de transmettre son mouvement de rotation à la courroie. Dans la suite de la description, les dénominations avant/arrière se réfèrent à cet organe. Ainsi une face avant est une face orientée en direction de l'organe alors qu'une face arrière est une face orientée en direction opposée dudit organe.

L'extrémité arrière de l'arbre 13 porte, ici, des bagues collectrices appartenant à un collecteur, non représenté. Des balais appartenant à un porte-balais, non représenté, sont disposés de façon à frotter sur les bagues collectrices. Le porte-balais est relié à un régulateur de tension (non représenté).

Le flasque avant 16 et le flasque arrière 17 peuvent comporter des ouvertures sensiblement latérales pour le passage d'un flux d'air en vue de permettre le refroidissement de la machine 10 par circulation d'air engendrée par la rotation d'un ventilateur avant 25 agencé sur une face axiale avant du rotor 12 et d'un ventilateur arrière 26 agencé sur une face axiale arrière dudit rotor.

Dans cet exemple, le rotor 12 est un rotor à griffe comportant deux roues polaires 31. Chaque roue polaire 31 est formée d'un plateau 32 orienté transversalement, d'une pluralité de griffes 33 formants des pôles magnétiques et d'un noyau 34 cylindrique. Le rotor comporte une bobine 35 enroulée autour du noyau. Par exemple, les bagues collectrices appartenant au collecteur sont reliées par des liaisons filaires à ladite bobine 35. Le rotor 12 peut également comporter des éléments magnétiques, tels que des aimants permanents, interposés entre deux griffes 33 adjacentes. Alternativement, le rotor peut être formé d'un paquet de tôles logeant des aimants permanents formant les pôles magnétiques.

Dans cet exemple de réalisation, le stator 15 comporte un corps 27 formé d'un paquet de tôles doté d'encoches, équipées d'isolant d'encoche pour le montage d'un bobinage électrique 28. Le bobinage traverse les encoches du corps 27 et forment un chignon avant 29 et un chignon arrière 30 de part et d'autre du corps du stator. Par ailleurs, le bobinage 28 est formé d'une ou plusieurs phases comportant au moins un conducteur électrique et étant reliées électriquement à un ensemble électronique 36.

L'ensemble électronique 36 qui est ici monté sur le boitier 11, comporte au moins un module électronique de puissance permettant de piloter au moins une phase du bobinage 28. Le module de puissance forme un pont redresseur de tension pour transformer la tension alternative générée en une tension continue et inversement.

La figure 2 illustre plus précisément un premier flasque de la machine électrique tournante 11, ce flasque étant dans l'exemple décrit ici, le flasque arrière 17. Le flasque arrière est ici le flasque sur lequel l'ensemble électronique 36 est monté.

Le flasque 17 comporte un plateau 37 s'étendant globalement transversalement par rapport un axe du flasque qui correspond ici à l'axe X de rotation de la machine. Le plateau présente dans cet exemple une ouverture centrale formant le palier accouplé au roulement à billes 19.

Le flasque comporte également une jupe 38 s'étendant globalement axialement à partir d'une extrémité du plateau 37, ladite extrémité étant opposée à l'extrémité formant le palier.

Dans l'exemple illustré, la jupe 38 comporte plusieurs épaulements 39 formant, chacun, une surface formant un arrêt axial permettant de bloquer, dans une direction axiale, le corps de stator 27. Chacun des épaulement 39 s'étend uniquement sur une portion de la circonférence totale de la jupe et sur une surface interne de la jupe. Le stator est ainsi bloqué axialement en plusieurs points distincts les unes des autres le long de la circonférence de la jupe.

Par exemple, la jupe comporte quatre épaulements 39. Lesdits épaulements peuvent être de forme et de dimension identiques les uns des autres.

Les épaulements 39 peuvent être agencés de manière à être angulairement régulièrement répartis le long de la circonférence de la jupe 38. Autrement dit, les épaulements adjacents présentent le même espacement les uns des autres le long de la circonférence de la jupe.

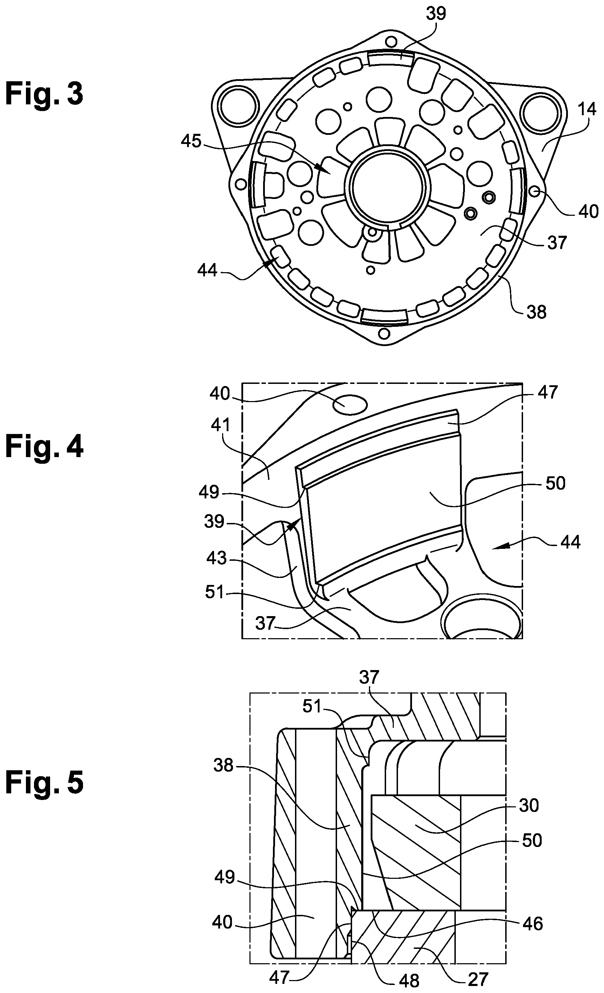

Chaque épaulement est notamment positionné, ici, de manière à être radialement entre l'axe X et un moyen de fixation 40 du flasque 17. Le moyen de fixation est notamment un moyen de fixation du flasque arrière 17 avec le flasque avant 16. Par exemple, ledit moyen 40 peut être un trou agencé pour recevoir un élément de fixation tel qu'une vis ou un tirant. La jupe 38 comporte une portion en saillie s'étendant dans une direction radiale vers l'extérieur qui comporte le moyen de fixation. Comme visible sur la figure 3, la jupe comporte quatre ensembles présentant chacun un épaulement 39 et un moyen de fixation 40 associé. Lesdits ensembles sont agencés de manière à être opposés deux à deux par rapport à l'axe X et notamment régulièrement répartis le long de la circonférence de la jupe.

Dans l'exemple illustré ici, chaque épaulement 39 s'étend circonférentiellement sur une portion de l'ordre de 8% de la circonférence totale de la jupe et par exemple. Toujours dans cet exemple, la somme des largeurs circonférentielles des épaulements 39 est de l'ordre de 32% de la circonférence totale de la jupe.

La jupe 38 comporte une portion annulaire 41 formant l'extrémité libre de ladite jupe, dans une direction axiale, une pluralité de bras 42 et une pluralité de portions de maintien 43 portant chacune un épaulement 39 pour le maintien du corps de stator 27. Lesdits bras et lesdites portions de maintien s'étendent chacun dans une direction globalement axiale entre ladite portion annulaire 41 et le plateau 37. Chaque portion de maintien 43 présente une largeur circonférentielle supérieure à celles des bras 42.

Des ouvertures radiales 44 sont agencées entre deux bras 42 successifs et entre un bras 42 et une portion de maintien 43. Lesdites ouvertures forment des passages d'air permettant le refroidissement de la machine électrique tournante. De préférence, les ouvertures radiales 44 sont agencées de manière à être chacune en vis-à-vis d'une portion du chignon arrière 30 du bobinage 28 du stator. De plus, les ouvertures radiales 44 sont prolongées axialement de manière à s'étendre entre deux épaulements 39 formant la surface d'arrêt axial du corps de stator 27. En particulier, lesdites ouvertures 44 sont agencées de manière à être chacune en vis-à-vis d'une portion de base dudit chignon, la portion de base du chignon étant une portion adjacente au corps de stator. Cela permet d'améliorer le refroidissement de la machine en permettant une évacuation de l'air chaud stagnant sur la partie radiale interne du chignon en permettant au flux d'air entrant axialement, via des ouvertures axiales 45 formées dans le plateau 37, de pousser l'air stagnant hors de l'enceinte de la machine via les ouvertures 44.

La figure 4 illustre plus précisément un exemple de réalisation de l'épaulement 39. L'épaulement est issu de matière avec la portion de maintien 43 et forme une saillie dans une direction radiale vers l'axe X.

Le corps de stator 27 est monté en contact avec l'épaulement 39 de manière à ce que ledit épaulement forme une surface d'arrêt axial ou une butée axiale permettant le maintien dans une direction axiale du corps de stator. Ainsi, comme visible sur l'exemple de la figure 5, une portion du pourtour externe radial 48 du corps de stator 27 est en contact avec une première surface circonférentielle 47 de la portion de maintien 43 de la jupe 38 et une portion externe de la surface d'extrémité axiale 46 du corps de stator 27 est en contact avec une surface de maintien 49 s'étendant radialement depuis la surface circonférentielle 47 pour former l'épaulement 39. De préférence, l'épaulement 39 est formé par usinage. En particulier, ladite surface 47 et ladite surface 49 s'étendant radialement sont usinées.

L'extrémité libre de la surface de maintien 49 est prolongée dans une direction globalement axiale par une deuxième surface circonférentielle 50. Ainsi, l'épaulement est formé par la surface de maintien 49 et la deuxième surface circonférentielle 50. Ladite surface 50 est de préférence usinée.

Dans l'exemple illustré sur la figure 4, la surface circonférentielle 50 s'étend axialement entre la surface de maintien et le plateau 37. Le plateau peut présenter un épaulement 51 formant une saillie axiale s'étendant jusqu'à la surface circonférentielle pour simplifier l'opération d'usinage de ladite surface.

La surface circonférentielle 50 s'étend en regard du chignon arrière 30. Ladite surface s'étend de manière parallèle à l'axe X.

Le flasque avant 16 de la machine électrique tournante 10 peut présenter au moins un épaulement tel que précédemment décrit. Ainsi, le flasque 16 peut présenter une forme similaire à celle du flasque arrière 17. Le corps de stator 27 est alors monté séré entre les deux flasques 16, 17 sur les surfaces de maintien 49 formant les épaulements 39.

Alternativement, le corps de stator 27 est fretté sur le flasque avant 16 et le flasque arrière 17 permet le blocage dans une direction axiale dudit corps.

La présente invention trouve des applications en particulier dans le domaine des alternateurs ou moteurs électriques mais elle pourrait également s'appliquer à tout type de machine tournante.

Bien entendu, la description qui précède a été donnée à titre d'exemple uniquement et ne limite pas le domaine de la présente invention dont on ne sortirait pas en remplaçant les différents éléments par tous autres équivalents, le domaine de protection de l'invention étant défini par les revendications.

## Revendications

1. Machine électrique tournante d'axe (X) comportant :
- un stator (15) comportant un corps de stator (27) formant des encoches et un bobinage électrique (28) logé au moins partiellement dans lesdites encoches, et
- au moins un flasque (16, 17) agencé pour entourer, au moins partiellement, le stator (15) et formant un arrêt axial pour le corps de stator, le flasque comportant :
- un plateau (37) s'étendant transversalement par rapport à l'axe (X),
- une jupe (38) s'étendant axialement à partir du plateau (37), la jupe (38) présentant des ouvertures radiales (44) permettant le passage d'un flux d'air et au moins un épaulement (39) formant un arrêt axial, l'épaulement (39) étant agencé pour bloquer axialement le corps de stator (27) de la machine électrique tournante ;
la machine étant **caractérisée en ce que** l'épaulement (39) s'étend uniquement sur une portion de la circonférence de la jupe (38) et sur une surface interne de la jupe et **en ce que** l'épaulement (39) s'étend circonférentiellement entre deux ouvertures radiales (44).

2. Machine selon la revendication précédente, **caractérisée en ce que** le flasque comporte plusieurs épaulements (39) agencés à distance les uns des autres le long de la circonférence de la jupe (38).

3. Machine selon l'une quelconque des revendications précédentes, **caractérisée en ce que** la jupe (38) présente au moins un moyen de fixation (40) destiné à participer à l'assemblage entre ledit flasque (17) et un autre flasque (16) de la machine électrique tournante et **en ce que** l'épaulement (39) est agencé radialement entre le moyen de fixation (40) et l'axe (X) du flasque.

4. Machine selon l'une quelconque des revendications précédentes, caractérisée en ce les épaulements (39) s'étendent, au total, circonférentiellement sur une portion inférieure à 70% de la circonférence totale de la jupe (38).

5. Machine selon l'une quelconque des revendications précédentes, **caractérisée en ce que** l'épaulement (39) est formé d'une surface de maintien (49) s'étendant dans une direction globalement radiale vers l'axe (X) et d'une surface circonférentielle (50) s'étendant globalement axialement depuis la surface de maintien, ladite surface de maintien et ladite surface circonférentielle étant usinées.

6. Machine selon la revendication 5, **caractérisée en ce que** la surface circonférentielle (50) s'étend depuis la surface de maintien (49) jusqu'au plateau (37).

7. Machine selon la revendication 5 ou 6, **caractérisée en ce que** la surface circonférentielle (50) s'étend dans une direction parallèle à l'axe (X).

8. Machine selon l'une quelconque des revendications précédentes, **caractérisée en ce que** la machine comporte un deuxième flasque (16), le corps de stator (27) présentant une zone de frettage avec ledit deuxième flasque.

## Patentansprüche

1. Rotierende elektrische Maschine mit einer Achse (X), umfassend:
- einen Stator (15) mit einem Statorkörper (27), der Nuten bildet, und einer elektrischen Wicklung (28), die zumindest teilweise in den genannten Nuten untergebracht ist, und
- mindestens einen Flansch (16, 17), der so angeordnet ist, dass er den Stator (15) zumindest teilweise umgibt und einen axialen Anschlag für den Statorkörper bildet, wobei der Flansch umfasst:
- eine Platte (37), die sich quer zur Achse (X) erstreckt,
- eine Schürze (38), die sich axial von der Platte (37) aus erstreckt, wobei die Schürze (38) radiale Öffnungen (44) aufweist, die den Durchgang eines Luftstroms ermöglichen, und mindestens eine Schulter (39), die einen axialen Anschlag bildet, wobei die Schulter (39) so angeordnet ist, dass sie den Statorkörper (27) der rotierenden elektrischen Maschine axial blockiert;
die Maschine ist **dadurch gekennzeichnet, dass** sich die Schulter (39) nur über einen Teil des Umfangs der Schürze (38) und über eine Innenfläche der Schürze erstreckt und dass sich die Schulter (39) in Umfangsrichtung zwischen zwei radialen Öffnungen (44) erstreckt.

2. Maschine nach dem vorhergehenden Anspruch, **dadurch gekennzeichnet, dass** der Flansch mehrere Schultern (39) aufweist, die entlang des Umfangs der Schürze (38) mit Abstand zueinander angeordnet sind.

3. Maschine nach einem der vorhergehenden Ansprüche, **dadurch gekennzeichnet, dass** die Schürze (38) mindestens ein Befestigungsmittel (40) aufweist, das dazu bestimmt ist, an der Montage zwischen dem genannten Flansch (17) und einem anderen Flansch (16) der rotierenden elektrischen Maschine mitzuwirken, und dass die Schulter (39) radial zwischen dem Befestigungsmittel (40) und der Achse (X) des Flansches angeordnet ist.

4. Maschine nach einem der vorhergehenden Ansprüche, **dadurch gekennzeichnet, dass** sich die Schultern (39) insgesamt in Umfangsrichtung über einen Anteil von weniger als 70% des Gesamtumfangs der Schürze (38) erstrecken.

5. Maschine nach einem der vorhergehenden Ansprüche, **dadurch gekennzeichnet, dass** die Schulter (39) aus einer Haltefläche (49), die sich in einer im Wesentlichen radialen Richtung zur Achse (X) hin erstreckt, und einer Umfangsfläche (50) gebildet ist, die sich im Wesentlichen axial von der Haltefläche aus erstreckt, wobei die genannte Haltefläche und die genannte Umfangsfläche bearbeitet sind.

6. Maschine nach Anspruch 5, **dadurch gekennzeichnet, dass** sich die Umfangsfläche (50) von der Haltefläche (49) bis zur Platte (37) erstreckt.

7. Maschine nach Anspruch 5 oder 6, **dadurch gekennzeichnet, dass** sich die Umfangsfläche (50) in einer zur Achse (X) parallelen Richtung erstreckt.

8. Maschine nach einem der vorhergehenden Ansprüche, **dadurch gekennzeichnet, dass** die Maschine einen zweiten Flansch (16) umfasst, wobei der Statorkörper (27) einen Aufschrumpfbereich mit dem genannten zweiten Flansch aufweist.

## Claims

1. Rotating electrical machine with axis (X) comprising:
- a stator (15) comprising a stator body (27) forming slots and an electrical winding (28) housed at least partially in said slots, and
- at least one flange (16, 17) arranged to surround, at least partially, the stator (15) and forming an axial stop for the stator body, the flange comprising:
- a plate (37) extending transversely with respect to the axis (X),
- a skirt (38) extending axially from the plate (37), the skirt (38) having radial openings (44) allowing the passage of an air flow and at least one shoulder (39) forming an axial stop, the shoulder (39) being arranged to axially lock the stator body (27) of the rotating electrical machine;
the machine being **characterised in that** the shoulder (39) extends only over a portion of the circumference of the skirt (38) and over an inner surface of the skirt and **in that** the shoulder (39) extends circumferentially between two radial openings (44).

2. Machine according to the preceding claim, **characterised in that** the flange comprises several shoulders (39) arranged at a distance from one another along the circumference of the skirt (38).

3. Machine according to any one of the preceding claims, **characterised in that** the skirt (38) has at least one fastening means (40) intended to participate in the assembly between said flange (17) and another flange (16) of the rotating electrical machine and **in that** the shoulder (39) is arranged radially between the fastening means (40) and the axis (X) of the flange.

4. Machine according to any one of the preceding claims, **characterised in that** the shoulders (39) extend, in total, circumferentially over a portion of less than 70% of the total circumference of the skirt (38).

5. Machine according to any one of the preceding claims, **characterised in that** the shoulder (39) is formed by a retaining surface (49) extending in a generally radial direction towards the axis (X) and a circumferential surface (50) extending generally axially from the retaining surface, said retaining surface and said circumferential surface being machined.

6. Machine according to claim 5, **characterised in that** the circumferential surface (50) extends from the retaining surface (49) to the plate (37).

7. Machine according to claim 5 or 6, **characterised in that** the circumferential surface (50) extends in a direction parallel to the axis (X).

8. Machine according to any one of the preceding claims, **characterised in that** the machine comprises a second flange (16), the stator body (27) having a shrink-fit zone with said second flange.
